**Europäisches Patentamt**

**European Patent Office**

**Office européen des brevets**

(19)

(11) Veröffentlichungsnummer : **0 460 364 B1**

(12)

# EUROPÄISCHE PATENTSCHRIFT

(45) Veröffentlichungstag der Patentschrift :
**07.07.93 Patentblatt 93/27**

(51) Int. Cl.$^5$ : **B60K 28/16**

(21) Anmeldenummer : **91104280.2**

(22) Anmeldetag : **20.03.91**

(54) **Verfahren zur Regelung des Antriebsschlupfes.**

(30) Priorität : **02.06.90 DE 4017891**

(43) Veröffentlichungstag der Anmeldung :
**11.12.91 Patentblatt 91/50**

(45) Bekanntmachung des Hinweises auf die
Patenterteilung :
**07.07.93 Patentblatt 93/27**

(84) Benannte Vertragsstaaten :
**ES FR GB IT NL SE**

(56) Entgegenhaltungen :
**EP-A- 0 338 538**
**EP-A- 0 397 329**
**DE-A- 3 635 095**

(73) Patentinhaber : **MERCEDES-BENZ
AKTIENGESELLSCHAFT
Postfach 60 02 02
W-7000 Stuttgart 60 (DE)**

(72) Erfinder : **Raiser, Hartmut
Fuchslöcher Strasse 3
W-7303 Neuhausen a.d. Fildern (DE)**

EP 0 460 364 B1

**Beschreibung**

Die Erfindung betrifft ein verfahren zur Regelung des Antriebsschlupfes (ASRV) gemäß dem Oberbegriff des Patentanspruches 1.

Es ist bereits ein gattungsgemäßes ASRV bekannt (DE 36 35 095 (A1), wonach bei einem ASRV ein Überschußmoment der angetriebenen Räder berechnet wird aus der trägen Masse des Antriebsstranges und den Drehzahlen der angetriebenen und der nicht angetriebenen Räder der einzelnen Fahrzeugseiten. Daraus wird dann berechnet, um welchen Betrag das an den angetriebenen Rädern aufzubringende Antriebsmoment zu reduzieren ist, damit ein bestimmter Schlupfsollwert erreicht wird. Die Reduzierung des Antriebsmomentes wird dabei aufgebracht, indem entweder an einem einzelnen Rad ein Bremsmoment aufgebracht wird, das dem zu diesem Rad ermittelten Überschußmoment entspricht oder indem das Motormoment um das Überschußmoment reduziert wird. Die Reduzierung des Überschußmomentes durch eine Reduzierung des Motormomentes erfolgt dabei in der Weise, daß aus einem Kennfeld, das eine Zuordnung des Drosselklappenwinkels zum Motormoment darstellt, der Drosselklappenwinkel ausgelesen wird, der gerade dem einzustellenden Motormoment entspricht. Gemäß diesem Verfahren ist es weiterhin bekannt, aus den gemessenen Drehzahlen der Räder die Drehbeschleunigungen zu ermitteln, mit dem Ziel, möglichst frühzeitig einen Fahrzustand zu erkennen, der zu einem überhöhten Schlupf der Räder führen wird, um dann durch eine frühzeitige Reduzierung des Antriebsmomentes das Erreichen eines kritischen Fahrzustandes zu vermeiden.

Des weiteren ist es bekannt (DE 37 22 049 (A1), den Antriebsstrang und/oder die Drehzahl der Räder auf Schwingungen zu untersuchen, um eine Schlupferkennung durchzuführen, indem bei Auftreten dieser Schwingungen geschlossen wird, daß ein großer Schlupf auftritt. Dieses Verfahren wird insbesondere bei einem allradangetriebenen Fahrzeug als vorteilhaft angegeben, da bei einem solchen Fahrzeug keine Drehzahl eines nicht angetriebenen Rades als Referenzdrehzahl eines sich schlupffrei drehenden Rades zur Verfügung steht.

Aus der DE 34 19 716 (A1) ist es bekannt, eine Hysterese beim Zu- bzw. Abschalten eines ASRV zu realisieren, um somit ein dauerndes Zu- und Abschalten bei Verwendung nur eines Schwellwertes zu vermeiden.

Weiterhin sind aus verschiedenen Druckschriften unterschiedliche Verfahren bekannt, die eine Verbesserung des Zeitverhaltens eines ASRV bewirken sollen. Beispielsweise wird in der DE 32 35 619 (A1) im Zusammenhang mit einer Schleppmomentenregelung vorgeschlagen, daß eine Steuerung des abzugebenden Motormomentes nicht über den Radschlupf sondern über die Drehzahl der Antriebsmaschine erfolgen soll. Aus der DE 35 44 294 (A1) ist es bekannt, bei einem Eintreten eines Kriteriums für die Aktivierung eines ASRV den Eingriff in die Steuerung einer Brennkraftmaschine derart zu gestalten, daß zu Beginn ein starker Eingriff erfolgt, der mit der Zeit schwächer wird. Damit soll ein Überschwingen in den Bereich zu niedrigen Schlupfes vermieden werden. Aus der DE 34 23 063 (A1) ist es bekannt, bei einer Durchdrehneigung eines Rades, abgeleitet aus dem Radschlupf bzw. der Radbeschleunigung, die Bremse dieses Rades gerade so weit anzulegen, daß noch keine unmittelbare Bremswirkung auftritt, um bei Auftreten des Kriteriums für das Einsetzen der Abbremsung des Rades diese Abbremsung mit einer minimierten Zeit der Einstellung der erforderlichen Stellgröße durchführen zu können. Die Berücksichtigung einer Durchdrehneigung eines Rades und daraus resultierend ein früher Regelbeginn ist grundsätzlich auch aus der DE 36 44 134 (A1) bekannt.

Weiterhin bekannt ist die Berücksichtigung der Zuordnung des Drosselklappenwinkels zum Motormoment, um somit ein möglichst genaues Einstellen des Sollmomentes zu erzielen (DE 34 17 089 A1, DE 37 36 192 (A1).

Aufgabe der Erfindung ist es, ein Verfahren zur Regelung des Antriebsschlupfes (ASRV) so auszubilden, daß durch einen schnellen Regeleingriff der stabile Fahrzustand möglichst schnell wieder erreicht wird.

Diese Aufgabe wird bei einem gattungsgemäßen ASRV erfindungsgemäß mit den Merkmalen des Anspruchs 1 gelöst, wobei die Merkmale der Unteransprüche vorteilhafte Aus- und Weiterbildungen kennzeichnen.

Vorteile der Erfindung gegenüber dem bekannten Stand der Technik bestehen darin, daß Vorhaltzeiten, die sich beim Stand der Technik bei der erforderlichen Signalfilterung von Drehzahlsignalen zur Vermeidung von Triebstrangschwingungen ergeben, bei dem erfindungsgemäßen Verfahren nicht auftreten, so daß gegenüber dem Stand der Technik ein schnellerer Regeleingriff möglich ist.

Bei dem erfindungsgemäßen ASRV wird als Führungsgröße ein sich aus den trägen Massen des Motors $I_{Motor}$ und der Räder $I_{Räder}$ sowie der Fahrzeuggeschwindigkeit $v_{Fzg}$ und einem Schlupfsollwert $\sigma_{soll}$ ergebender Sollwert $L_{soll}$ des Drehimpulses verwendet. Der zu dieser Führungsgröße gehörende Istwert des Drehimpulses $L_{Ist}$ ergibt sich aus den trägen Massen der Räder $I_{Räder}$ und der sich in einer Drehbewegung befindlichen Teile des Motors $I_{Motor}$, jeweils multipliziert mit den sich aufgrund der jeweiligen Drehbewegungen ergebenden zugehörigen Drehzahlen $\Omega_{Räder}$ und $\Omega_{Motor}$.

Ein Ausführungsbeispiel der Erfindung ist in der Zeichnung schematisch dargestellt und wird im folgenden näher beschrieben. Es zeigen:

2

Fig. 1: einen möglichen Ablauf des erfindungsgemäßen Verfahrens,

Fig. 2: eine mögliche Berechnung des Überschußmomentes unter Berücksichtigung bleibender Regelabweichungen,

Fig. 3: einen möglichen Ablauf des Verfahrens zum Abbau des Überschußmomentes,

Fig. 4: eine Möglichkeit zur Realisierung des teilweisen Auf- und Abbaus des Überschußmomentes,

Fig.5-8: eine Darstellung eines Ausführungsbeispieles der Meßwertaufnahme und Weiterverarbeitung, wobei in den Fig. im einzelnen dargestellt ist:

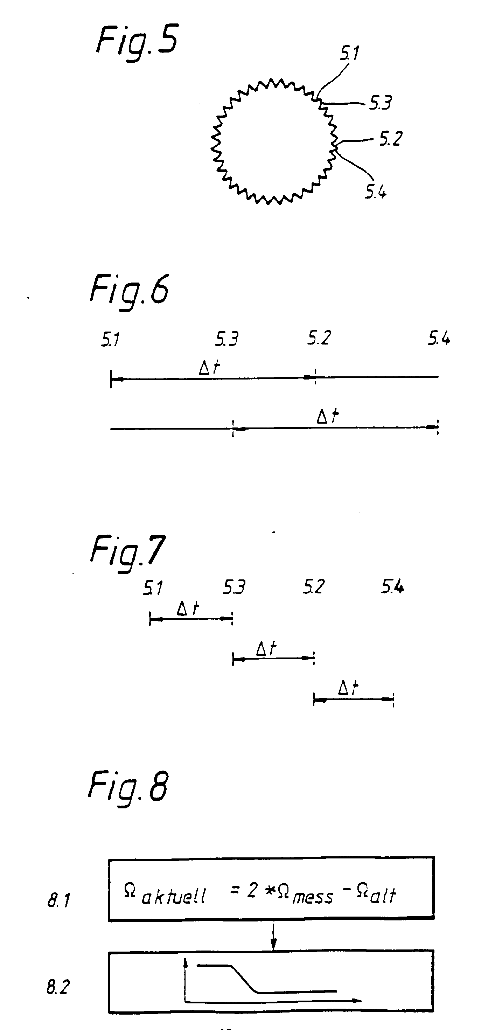

Fig. 5: ein sägezahnförmiges Impulsrad mit einer Bezeichnung der ansteigenden und abfallenden Teile der sägezahnförmigen Oberfläche,

Fig. 6: eine erste Auswertungsmöglichekit unter Berücksichtigung sowohl ansteigender als auch abfallender Flanken des Meßsignales,

Fig. 7: eine zweite Auswertungsmöglichkeit unter Berücksichtigung sowohl ansteigender als auch abfallender Flanken des Meßsignales und

Fig. 8: ein Verfahrensablauf zur Auswertung des Meßsignales.

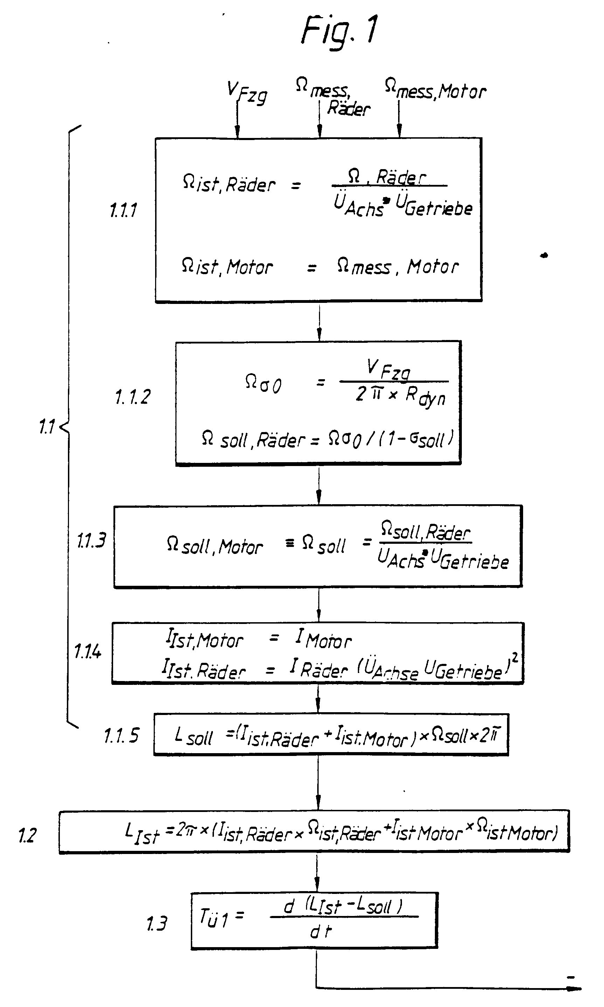

Wie aus Fig. 1 ersichtlich, wird - wie in dem Schritt 1.1 dargestellt - der Sollwert $L_{soll}$ des Drehimpulses aus den trägen Massen des Motors $I_{Motor}$ und der Räder $I_{Räder}$ sowie der Fahrzeuggeschwindigkeit $V_{Fzg}$ und dem Schlupfsollwert $\sigma_{soll}$ ermittelt. In einer besonders vorteilhaften Ausführungsform der Realisierung eines ASRV werden alle relevanten Drehzahlen entsprechend den Übersetzungsverhältnissen der Achsdifferentiale $\ddot{U}_{Achse}$ und des Übersetzungsgetriebes $\ddot{U}_{Getriebe}$ auf einen Punkt bezogen - wie z.B. den Getriebeeingang entsprechend der Darstellung in dem Schritt 1.1.1 -, so daß alle Drehzahlen unmittelbar miteinander verglichen werden können. Es ergibt sich somit nur ein Sollwert der Drehzahl $\Omega_{soll}$ gemeinsam für die Drehzahl der Räder und für die Drehzahl der Kurbelwelle des Motors entsprechend dem Schritt 1.1.3. Durch eine Umrechnung der jeweiligen gemessenen Drehzahlen $\Omega_{mess,Räder}$ und $\Omega_{mess,Motor}$ unter Verwendung der Übersetzungsverhältnisse der Achsdifferentiale $\ddot{U}_{Achse}$ und des Übersetzungsgetriebes $\ddot{U}_{Getriebe}$ auf den Getriebeeingang ergeben sich somit wie in dem Schritt 1.1.1 dargestellt die Istwerte $\Omega_{ist,Räder}$ und $\Omega_{ist,Motor}$. Dadurch ist ein besonders einfacher Vergleich der Drehzahlen möglich. Für die Bestimmung des Sollwertes $L_{soll}$ des Drehimpulses wird somit die Solldrehzahl $\Omega_{soll}$ benötigt, die in den Schritten 1.1.2 und 1.1.3 ermittelt wird. Diese Solldrehzahl $\Omega_{soll}$ ergibt sich aus dem Sollschlupf $\sigma_{soll}$ und einer Drehzahl $\Omega_{\sigma 0}$, die dem Wert der Drehzahl $\Omega$ bei schlupffreier Fahrt entspricht. Außer der Fahrzeuggeschwindigkeit $V_{Fzg}$ geht in die Berechnung der Solldrehzahl der Räder $\Omega_{soll,Räder}$ noch der dynamische Radradius $R_{dyn}$ ein. Die Solldrehzahl der Räder $\Omega_{soll,Räder}$ ergibt sich nach folgenden Gleichungen in dem Schritt 1.1.2:

$$\Omega_{\sigma 0} = V_{Fzg} / (2\pi * R_{dyn})$$
$$\Omega_{soll,Räder} = \Omega_{\sigma 0} / (1 - \sigma_{soll}).$$

Aus diesem Sollwert der Drehzahl $\Omega_{soll,Räder}$ läßt sich somit unter Berücksichtigung der Übersetzungsverhältnisse der Achsdifferentiale $\ddot{U}_{Achse}$ und des Übersetzungsgetriebes $\ddot{U}_{Getriebe}$ in dem Schritt 1.1.3 ein Sollwert der Drehzahl der Kurbelwelle des Motors $\Omega_{soll,Motor}$ ermitteln. Aufgrund der Gegebenheiten dieses in Fig. 1 dargestellten Ausführungsbeispieles (Rückbeziehung der Drehzahlen auf den Getriebeeingang) ist diese Drehzahl $\Omega_{soll,Motor}$ gerade gleich der Drehzahl $\Omega_{soll}$. Ebenso wie die Drehzahlen werden in dem Schritt 1.1.4 auch die Trägheitsmomente auf den Getriebeeingang bezogen. Das bei weiteren Berechnungen zu verwendende Trägheitsmoment $I_{ist,Motor}$ ist dabei gleich dem Trägheitsmoment $I_{Motor}$. Das bei weiteren Berechnungen zu verwendende Trägheitsmoment $I_{ist,Räder}$ ergibt sich aus dem Trägheitsmoment $I_{Räder}$ nach der Gleichung:

$$I_{ist,Räder} = I_{Räder} / (\ddot{U}_{Achse} * \ddot{U}_{Getriebe})^2$$

Gemäß dem Schritt 1.1.5 wird nun der Sollwert $L_{soll}$ des Drehimpulses berechnet nach der Gleichung:

$$L_{soll} = (I_{ist,Räder} + I_{ist,Motor}) * 2\pi * \Omega_{soll}.$$

Der zu dieser Führungsgröße gehörende Istwert des Drehimpulses $L_{ist}$ ergibt sich somit entsprechend der Darstellung in dem Schritt 1.2 aus den trägen Massen der Räder $I_{ist,Räder}$ und der sich in einer Drehbewegung befindlichen Teile des Motors $I_{ist,Motor}$, jeweils multipliziert mit den sich aufgrund der jeweiligen Drehbewegungen ergebenden zugehörigen Drehzahlen $\Omega_{ist,Räder}$ und $\Omega_{ist,Motor}$ nach der Gleichung:

$$L_{ist} = 2\pi * (I_{ist,Räder} * \Omega_{ist,Räder} + I_{ist,Motor} * \Omega_{ist,Motor}).$$

Wird von dem Motor ein Überschußmoment $T_{ü}$ abgegeben, das von den Rädern nicht auf die Straße übertragen werden kann, führt dies zu einer Winkelbeschleunigung, die wiederum eine Änderung des Drehimpulses bewirkt. Dieses Überschußmoment $T_{ü}$ wird in dem Schritt 1.3 durch eine Zeitableitung der Differenz des Istwertes des Drehimpulses $L_{ist}$ und des Sollwertes des Drehimpulses $L_{soll}$ ermittelt entsprechend der Gleichung:

$$T_{ü1} = d(L_{ist} - L_{soll}) / dt.$$

Dieses Überschußment $T_{ü1}$ ist somit die Zeitableitung des gemessenen Drehimpulses (insgesamt zur Verfügung gestelltes Antriebsmoment) abzüglich der Zeitableitung des sich aus der Solldrehzahl ergebenden Sollwertes des Drehimpulses (abgesetztes Antriebsmoment). Mittels des in Fig. 1 dargestellten Teiles des erfindungsgemäßen Verfahrens können somit Änderungen des Drehimpulses bezogen auf einen bestimmten Anfangswert ausgeglichen werden, da die zeitliche Änderung der Differenz des Drehimpulses zu dem Sollwert des Drehimpulses betrachtet wird.

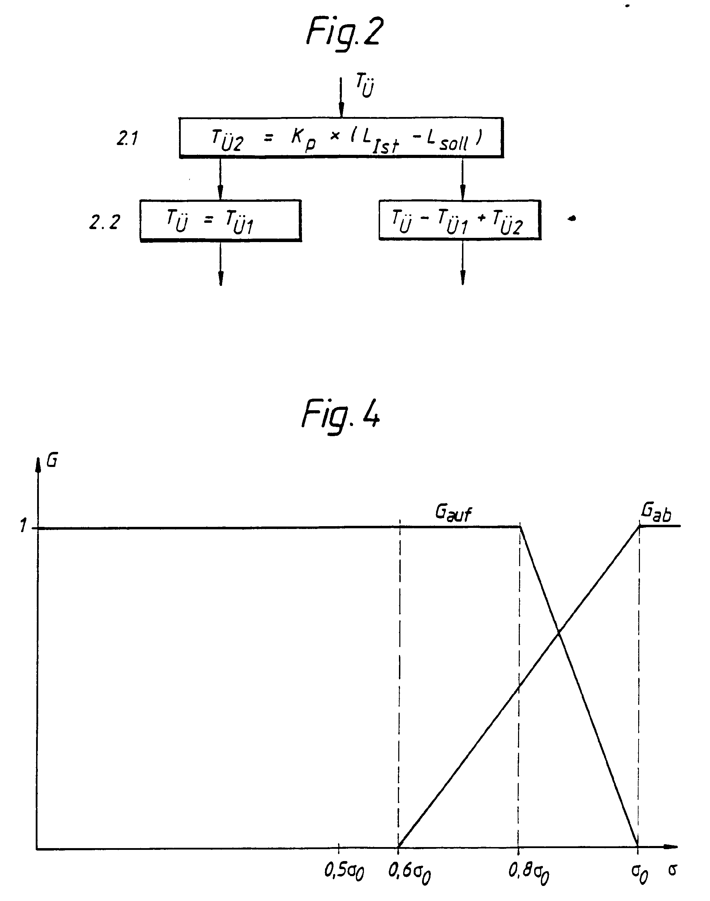

Um bleibende Abweichungen des Istwertes $L_{ist}$ von dem Sollwert $L_{soll}$ des Drehimpulses abbauen zu können, kann entsprechend der Darstellung der Fig. 2 zu dem in Fig. 1 ermittelten Überschußmoment $T_{ü1}$ in dem Schritt 2.2 ein Moment $T_{ü2}$ addiert werden, das entsprechend dem Schritt 2.1 mit einem Proportionalitätsfaktor $K_p$ proportional zu der Differenz des Istwertes $L_{ist}$ des Drehimpulses zum Sollwert $L_{soll}$ des Drehimpulses ist, so daß sich ein Gesamt-Überschußmoment $T_ü$ ergibt. Alternativ kann das Gesamt-Überschußmoment jedoch auch gleich dem Überschußmoment $T_{ü1}$ gesetzt werden. Da das Moment $T_{ü2}$ eine Drehbeschleunigung bzw. eine Drehverzögerung bewirkt, ergibt sich somit bei Betrachtung des der Drehzahl proportionalen Drehimpulses als Regelgröße ein integrales Verhalten des zu regelnden Prozesses bezüglich der Differenz des Istwertes $L_{ist}$ des Drehimpulses zu dem Sollwert $L_{soll}$ des Drehimpulses. Die gesamte Regelstrecke bezüglich der Bestimmung dieses Momentes $T_{ü2}$ weist somit insgesamt ein $PT_1$-Verhalten auf, das sich aus der Momentenbilanz ergibt:

$$ I * d\Omega/dt = - K_p * ( L_{ist} - L_{soll} ) $$

Durch Integration erhält man auf der linken Seite der Gleichung den Drehimpuls $L_{ist}$. Somit ergibt sich das integrale Verhalten des Prozesses. In Verbindung mit einem Proportionalregler im Vorwärtszweig der Regelstrecke ergibt sich somit insgesamt das $PT_1$-Verhalten der gesamten Regelstrecke. Dabei kann die Konstante $K_p$ in einer solchen Größenordnung gewählt werden, daß sich eine Zeitkonstante von ca. 0,1 s ergibt.

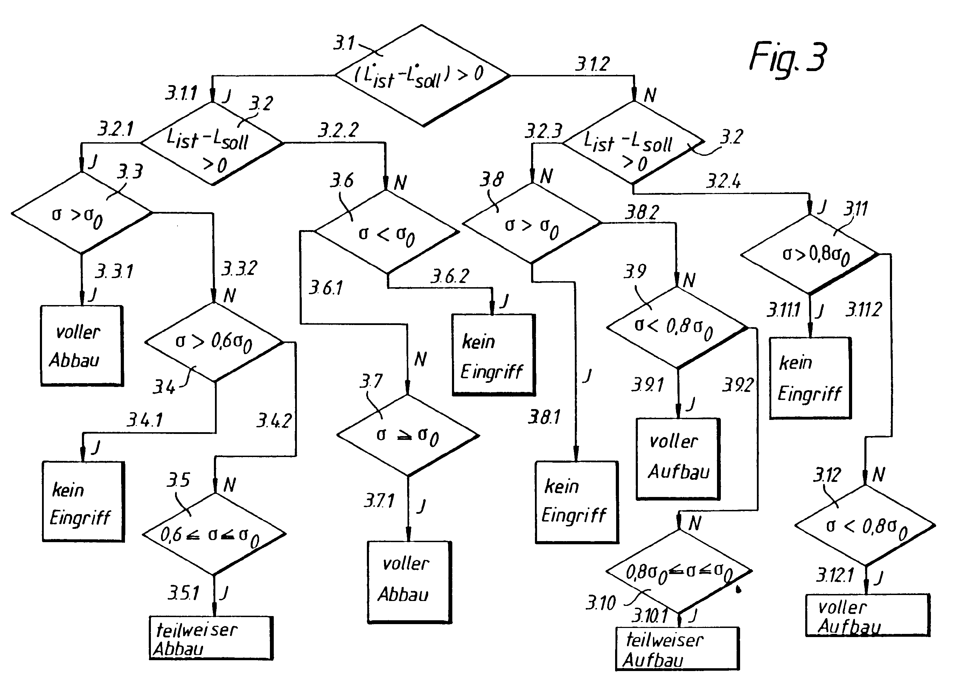

Gemäß der Darstellung der Fig. 2 ergibt sich somit ein von dem Motor abzugebendes Sollmoment, indem das maximal übertragbare Motormoment $M_{max}$ eingestellt wird. Fig. 3 zeigt die Darstellung eines Ausführungsbeispiels, wie dabei der Abbau des Gesamt-Überschußmomentes $T_ü$ erfolgen kann. Um ein möglichst optimales Zeitverhalten des Motormomentes bezüglich dem Abbau des Gesamt-Überschußmomentes $T_ü$ und dem Wiederaufbau eines zu stark abgebauten Motormomentes zu erhalten, hat es sich als vorteilhaft erwiesen, in bestimmten Bereichen eine prozentuale Gewichtung des Abbaus und des Wiederaufbaus des Motormomentes durchzuführen. Durch die sich somit einstellende Hysterese ergibt sich insgesamt eine bessere Dämpfung der Ausgangsgröße. Außerdem kann dadurch ein Überschwingen der Regelgröße weitgehend vermieden werden und man erhält eine längere Verweildauer im stabilen Gebiet der $\mu$-$\sigma$-Kurve. In dem Schritt 3.1 wird dabei zunächst überprüft, ob das entsprechend der Darstellung der Fig. 1 aus der Differenz der Zeitableitung des Istwertes des Drehimpulses $L_{ist}$ und des Sollwertes des Drehimpulses $L_{soll}$ nach der Gleichung:

$$ T_{ü1} = d(L_{ist} - L_{soll}) / dt . $$

ermittelte Überschußmoment $T_{ü1}$ größer als 0 ist. Ist dies der Fall, erfolgt die weitere Verarbeitung in Richtung des Pfeiles 3.1.1. In dem Schritt 3.2 wird dabei gleichzeitig geprüft, ob die Differenz des Istwertes $L_{ist}$ des Drehimpulses und des Sollwertes $L_{soll}$ des Drehimpulses, d.h. $L_{ist}$-$L_{soll}$, größer als 0 ist. Erfolgte der Verfahrensablauf in Richtung des Pfeiles 3.1.1, und ergab sich bei dem Schritt 3.2, daß $L_{ist}$-$L_{soll}$ größer als 0 ist, erfolgt der weitere Ablauf des erfindungsgemäßen Verfahrens in Richtung des Pfeiles 3.2.1. In dem Schritt 3.3 wird dann geprüft, ob der Istwert $\sigma_{ist}$ des Schlupfes größer ist als der Sollwert $\sigma_{soll}$ des Schlupfes. Ist dies der Fall, erfolgt der Ablauf des Verfahrens in Richtung des Pfeiles 3.3.1, d.h. daß das Gesamt-Überschußmoment $T_ü$ total abgebaut wird. War die Bedingung in dem Schritt 3.3 nicht erfüllt, erfolgt der weitere Ablauf des erfindungsgemäßen Verfahrens in Richtung des Pfeiles 3.3.2. In dem Schritt 3.4 wird dann überprüft, ob der Istwert $\sigma_{ist}$ des Schlupfes kleiner ist als das 0,6-fache des Sollwertes $\sigma_{soll}$ des Schlupfes. Ist dies der Fall, erfolgt der weitere Ablauf des Verfahrens in Richtung des Pfeiles 3.4.1, d.h., daß weder ein Auf- noch ein Abbau des Gesamt-Überschußmomentes $T_ü$ erfolgt. War dies nicht der Fall, erfolgt der weitere Ablauf des erfindungsgemäßen Verfahrens entsprechend der Richtung des Pfeiles 3.4.2, d.h., daß der Istwert $\sigma_{ist}$ des Schlupfes zwischen dem 0,6-fachen des Sollwertes $\sigma_{soll}$ des Schlupfes und dem Sollwert $\sigma_{soll}$ des Schlupfes liegt, wie dies in dem Schritt 3.5 dargestellt ist. Entsprechend der Richtung des Pfeiles 3.6 erfolgt dann ein teilweiser Abbau des Gesamt-Überschußmomentes $T_ü$.

Ergab die Kombination der Abfragen 3.1 und 3.2 eine Richtung des Verfahrensablaufes in Richtung des Pfeiles 3.2.1, so liegt zwar ein Gesamt-Überschußmoment $T_ü$ vor, der Abbau erfolgt jedoch in Abhängigkeit der ausgenutzten Traktion, d.h. in Abhängigkeit des momentanen Schlupfes. Entsprechend dem Pfeil 3.4.1 führt das Gesamt-Überschußmoment $T_ü$ somit zu der gewünschten zügigen Beschleunigung der Räder in Richtung des Sollwertes $\sigma_{soll}$ des Schlupfes bei einem kleinen Istwert $\sigma_{ist}$ des Schlupfes. Liegt der Istwert $\sigma_{ist}$ des Schlupfes oberhalb des Sollwertes $\sigma_{soll}$ des Schlupfes, muß entsprechend dem Pfeil 3.3.1 ein vollständiger Abbau des Gesamt-Überschußmomentes $T_ü$ erfolgen, um eine weitere Beschleunigung der Räder und somit ein weiteres Entfernen vom Sollwert zu verhindern. Liegt der Istwert $\sigma_{ist}$ des Schlupfes in dem in dem Schritt 3.5 angegebenen Bereich, müssen die Räder weiterhin beschleunigt werden, um den Sollwert $\sigma_{soll}$ des Schlupfes zu erreichen. Geschieht der Beschleunigungsvorgang in diesem Bereich des Schlupfes jedoch mit einem zu großen Überschußmoment, kommt es zu einem unerwünschten Überschwingen in den instabilen Bereich

der $\mu$-$\sigma$-Kurve. Deswegen erfolgt entsprechend dem Pfeil 3.5.1 eine Reduzierung des Gesamt-Überschuß-momentes $T_{\ddot{u}}$. Diese Reduzierung ist in der Fig. 4 dargestellt.

Ergab sich bei den Überprüfungen in den Schritten 3.1 und 3.2, daß der weitere Ablauf des Verfahrens in Richtung des Pfeiles 3.2.2 erfolgt, wird nur unterschieden, ob der Istwert $\sigma_{ist}$ des Schlupfes größer oder kleiner als der Sollwert $\sigma_{soll}$ des Schlupfes ist. Ergibt sich entsprechend der Überprüfung in dem Schritt 3.6, daß der Istwert $\sigma_{ist}$ des Schlupfes kleiner ist als der Sollwert $\sigma_{soll}$ des Schlupfes, erfolgt der weitere Ablauf des Verfahrens in Richtung des Pfeiles 3.6.2, d.h., daß weder ein Auf- noch ein Abbau des Gesamt-Überschußmomentes $T_{\ddot{u}}$ erfolgt. Andernfalls erfolgt der weitere Ablauf des Verfahrens in Richtung des Pfeiles 3.6.1, d.h., daß entsprechend der Darstellung in dem Schritt 3.7 der Istwert $\sigma_{ist}$ des Schlupfes größer oder gleich dem Sollwert $\sigma_{soll}$ des Schlupfes ist. Entsprechend dem Pfeil 3.7.1 erfolgt dann ein vollständiger Abbau des Gesamt-Über-schußmomentes $T_{\ddot{u}}$.

Bei dem Ablauf des Verfahrens in Richtung des Pfeiles 3.2.2 kann gegenüber dem Ablauf des Verfahrens in Richtung des Pfeiles 3.2.1 auf die gesonderte Berücksichtigung der Tendenz zum Überschwingen anhand des Schlupfes verzichtet werden, da die "antreibende Kraft" (der Drehimpulsistwert $L_{ist}$) geringer ist als der zugehörige Sollwert ($L_{soll}$).

Ergibt sich bei der Kombination der Überprüfungen 3.1 und 3.2 ein Ablauf des Verfahrens in Richtung des Pfeiles 3.2.3, so wird in dem Schritt 3.8 überprüft, ob der Istwert $\sigma_{ist}$ des Schlupfes größer ist als der Sollwert $\sigma_{soll}$ des Schlupfes. Ist dies der Fall, erfolgt entsprechend dem Pfeil 3.8.1 weder ein Auf- noch ein Abbau des Gesamtüberschußmomentes $T_{\ddot{u}}$. Andernfalls erfolgt der Ablauf des Verfahrens in Richtung des Pfeiles 3.8.2. In dem Schritt 3.9 wird dann überprüft, ob der Istwert $\sigma_{ist}$ des Schlupfes unter dem 0,8-fachen des Sollwertes $\sigma_{soll}$ des Schlupfes liegt. Ist dies der Fall, wird entsprechend dem Pfeil 3.9.1 das Gesamt-Überschußmoment $T_{\ddot{u}}$ voll wiederaufgebaut. Andernfalls erfolgt der Ablauf des Verfahrens in Richtung des Pfeiles 3.9.2, wonach entsprechend dem Schritt 3.10 der Istwert $\sigma_{ist}$ des Schlupfes zwischen dem 0,8-fachen des Sollwertes $\sigma_{soll}$ des Schlupfes und dem Sollwert $\sigma_{soll}$ des Schlupfes liegt. In diesem Fall erfolgt ein teilweiser Wiederaufbau des Gesamt-Überschußmomentes $T_{\ddot{u}}$ entsprechend dem Pfeil 3.10.1.

Ergibt die Kombination der Abfragen 3.1 und 3.2 einen Ablauf des erfindungsgemäßen Verfahrens in Richtung des Pfeiles 3.2.4, so wird zunächst in dem Schritt 3.11 geprüft, ob der Istwert $\sigma_{ist}$ des Schlupfes größer ist als das 0,8-fache des Sollwertes $\sigma_{soll}$ des Schlupfes. Ist dies der Fall, erfolgt weder ein Aufnoch ein Abbau des Gesamtüberschußmomentes $T_{\ddot{u}}$ entsprechend dem Pfeil 3.11.1. Ist dies nicht der Fall, so ist entsprechend dem Schritt 3.12 der Istwert $\sigma_{ist}$ des Schlupfes kleiner als das 0,8-fache des Sollwertes $\sigma_{soll}$ des Schlupfes. Entsprechend dem Pfeil 3.12.1 erfolgt dann ein voller Wiederaufbau des Gesamt-Überschußmomentes $T_{\ddot{u}}$.

Aus Fig. 4 ist eine Möglichkeit zur Realisierung eines teilweisen Auf- und Abbaus des Gesamt-Überschuß-momentes $T_{\ddot{u}}$ ersichtlich. Dargestellt ist in dem Diagramm ein Faktor G, mit dem das Gesamt-Überschußmo-ment $T_{\ddot{u}}$ multipliziert wird. Dieses Moment wird dann von dem aufgrund der Fahrpedalstellung vorgegebenen Moment subtrahiert. Entsprechend der Darstellung zeigt sich, daß bis zu dem 0,6-fachen Sollwert $\sigma_{soll}$ des Schlupfes kein Moment abgebaut wird ($G_{ab}=0$). Der Faktor steigt dann linear an, bis er beim Sollwert $\sigma_{soll}$ des Schlupfes den Wert 1 erreicht. Der Wiederaufbau des Momentes geschieht dagegen versetzt, indem ab dem 0,8-fachen des Sollwertes $\sigma_{soll}$ der Faktor $G_{auf}$ für den Aufbau des Momentes verringert wird. Diese Verringerung erfolgt dabei linear bis beim Erreichen des Sollwertes $\sigma_{soll}$ des Schlupfes der Faktor $G_{auf}$ den Wert 0 erreicht hat.

In vorteilhafter Weise wird das erfindungsgemäße Verfahren nicht nur zur Regelung des Antriebsschlupfes verwendet sondern auch zur Regelung des Schlupfes im Schleppbetrieb. Im letzteren Fall wird zweckmäßigerweise ein konstanter Sollwert des Schlupfes vorgegeben, während im ersteren Fall in vorteilhafter Weise eine Anpassung des Sollwertes $\sigma_{soll}$ des Schlupfes an die momentan vorliegende $\mu$-$\sigma$-Kurve erfolgt.

Das bedeutet, daß aus den angegebenen Kriterien ein maximal übertragbares Motormoment $M_{max}$ ermittelt und mit dem aus der Fahrpedalstellung abgeleiteten Wunsch des Fahrzeugführers bezüglich des Motormomentes verglichen wird. Erweist sich dabei, daß der Fahrzeugführer ein Motormoment wünscht, daß in dieser Größe nicht absetzbar ist, wird durch das ASRV ein Motormoment eingestellt, das zu einem stabilen Fahrverhalten führt. Dieses Motormoment wird dabei derart ermittelt, daß von dem maximal übertragbaren Motormo-ment $M_{max}$ - beispielsweise entsprechend den in Fig. 3 angegebenen Kriterien - das Gesamt-Überschußmo-ment $T_{\ddot{u}}$ abgezogen wird. Unter Umständen kann dies auch bedeuten, daß ein Motormoment eingestellt wird, das größer ist als $M_{max}$, da das Gesamt-Überschußmoment $T_{\ddot{u}}$ auch negativ sein kann.

Das erfindungsgemäße Verfahren erfordert eine Meßwertaufnahme sowie eine Weiterverarbeitung der aufgenommenen Meßwerte mit einer sehr kurzen Zeitverzögerung. Ein Ausführungsbeispiel dafür ist in den Fig. 5-8 gegeben, die im folgenden beschrieben werden sollen.

Gemäß der Darstellung der Fig. 5 weist ein sägezahnförmiges Impulsrad ansteigende Flanken 5.1 und 5.2 sowie abfallende Flanken 5.3 und 5.4 auf. Die ansteigenden Flanken 5.1 und 5.2 führen zu einem Anstieg im Verlauf des Meßsignales, die abfallenden Flanken 5.3 und 5.4 führen zu einem Abfall im Verlauf des Meßsignales.

In Fig. 6 ist eine erste Auswertungsmöglichkeit des Meßsignales dargestellt, bei der die Drehzahl ermittelt wird, indem die Zeitdauer von einer ansteigenden Flanke 5.1 zur nächsten ansteigenden Flanke 5.2 bestimmt wird. Zwischenzeitlich wird der Wert der Drehzahl wieder aktualisiert, weil zusätzlich die Zeitdauer von einer (in diesem Fall nur durch gepunktete Linien dargestellten) abfallenden Flanke zur nächsten 5.3 bestimmt wird.

Ein zweite Auswertungsmöglichkeit des Meßsignales ist in Fig. 7 dargestellt. Es wird dort ein Wert der Drehzahl bestimmt, indem die Zeitdauer von einer ansteigenden Flanke 5.1 zur nächsten abfallenden Flanke 5.3 ermittelt wird. Ein neuer Wert der Drehzahl ergibt sich dann, indem die Zeitdauer von der abfallenden Flanke 5.3 zur nächsten ansteigenden Flanke 5.2 ermittelt wird. Entsprechend wird der Wert der Drehzahl wiederum aktualisiert, indem die Zeitdauer von der ansteigenden Flanke 5.2 zur nächsten abfallenden Flanke 5.4 ermittelt wird.

Entsprechend der Darstellung der Fig. 8 kann eine Filterung des entsprechend den Fig. 6 oder 7 gewonnen Meßsignales $\Omega_{mess}$ erfolgen, indem gemäß dem Schritt 8.1 der aktuelle Wert $\Omega_{mess,aktuell}$ mit dem bisher ermittelten Wert der Drehzahl $\Omega_{alt}$ verglichen wird, um die aktuelle Drehzahl $\Omega_{aktuell}$ zu erhalten. Liegt der nächste Wert der gemessenen Drehzahl $\Omega_{mess,aktuell}$ vor, so entspricht der Wert der Drehzahl $\Omega_{alt}$ bei der erneuten Bestimmung der Drehzahl dem Wert $\Omega_{aktuell}$ bei der vorhergehenden Bestimmung der Drehzahl. Da sich somit ein zeitlich treppenförmiger Verlauf der Drehzahl ergibt, wird in einer besonders vorteilhaften Ausführungsform der Signalverlauf $\Omega_{aktuell}$ einer Tiefpaßfilterung unterzogen, die beispielsweise durch ein $PT_1$-Glied realisiert sein kann.

**Patentansprüche**

1. Verfahren zur Regelung des Antriebsschlupfes,
   wobei ein von dem Motor abgegebenes Überschußmoment ermittelt wird aus der Trägheitsmasse der Räder, der Trägheitsmasse des Antriebsstranges, der Drehzahl der angetriebenen Räder und der Drehzahl des Motors,
   **dadurch gekennzeichnet,**
   - daß aus der Fahrzeuggeschwindigkeit $v_{Fzg}$ und den dynamischen Radradien $R_{dyn}$ ein Wert $\Omega_{o0}$ der Drehzahl ermittelt wird, der der Drehzahl bei einer schlupffreien Fahrt entspricht,
   - daß aus der Drehzahl $\Omega_{o0}$ eine Drehzahl $\Omega_{soll,Räder}$ bestimmt wird, die dem Sollwert der Raddrehzahl entspricht,
   - daß aus der Drehzahl $\Omega_{soll,Räder}$ eine Drehzahl $\Omega_{soll,Motor}$ abgeleitet wird, die dem Sollwert der Motordrehzahl entspricht,
   - daß aus den Trägheitsmomenten $I_{ist,Motor}$ und $I_{ist,Räder}$ des Antriebsstranges und der Räder sowie der Drehzahlen $\Omega_{soll,Räder}$, $\Omega_{soll,Motor}$ ein Sollwert $L_{soll}$ des Drehimpulses bestimmt wird,
   - daß aus den gemessenen Drehzahlen $\Omega_{mess,Motor}$ und $\Omega_{mess,Räder}$ des Antriebsstranges und der Räder sowie den zugehörigen Trägheitsmomenten der Istwert $L_{ist}$ des Drehimpulses ermittelt wird,
   - daß aus der Differenz der Zeitableitungen des Istwertes $L_{ist}$ von dem Sollwert $L_{soll}$ ein Überschußmoment $T_{ü}$ ermittelt wird und
   - daß das ermittelte Überschußmoment $t_{ü}$ als Regelkriterium für eine Antriebsschlupfregelung (ASR) verwendet wird.

2. Verfahren nach Anspruch 1,
   **dadurch gekennzeichnet,**
   daß die Trägheitsmomente sowie die Raddrehzahlen entsprechend den Übersetzungsverhältnissen des Getriebes und der Achsdifferentiale auf einen Punkt bezogen werden.

3. Verfahren nach Anspruch 1 oder 2,
   **dadurch gekennzeichnet,**
   daß zu dem Überschußmoment $T_{ü}$ ein weiterer Anteil addiert wird, der proportional zur Differenz ($L_{ist}$-$L_{soll}$) ist.

4. Verfahren nach einem der Ansprüche 1 bis 3,
   **dadurch gekennzeichnet,**
   daß das Zeitverhalten des Momentenabbaus derart realisiert ist, daß bei einem kritischen Fahrzustand ein voller Abbau des Überschußmomentes $T_{ü}$ erfolgt.

**5.** Verfahren nach einem des Ansprüche 1 bis 4,
**dadurch gekennzeichnet,**
daß bei einer Tendenz zu einem kritischen Fahrzustand ein zumindest teilweiser Abbau des Überschußmomentes $T_ü$ erfolgt.

**6.** Verfahren nach einem der Ansprüche 1 bis 5,
**dadurch gekennzeichnet,**
daß bei einem unkritischen Fahrzustand ein voller Aufbau des Momentes erfolgt.

**7.** Verfahren nach einem der Ansprüche 1 bis 6,
**dadurch gekennzeichnet,**
daß bei einer Tendenz zu einem kritischen Fahrzustand nur ein teilweiser Aufbau des Momentes erfolgt.


## Claims

**1.** A method of controlling wheel slip, in which an excess torque delivered by the engine is ascertained from the mass of inertia of the wheels, the mass of inertia of the drive line, the rotary speed of the driven wheels and the rotary speed of the engine, characterised in that
- from the travelling speed $v_{Fzg}$ and the dynamic wheel radii $R_{dyn}$, a value $\Omega_{o0}$ for rotary speed is ascertained which corresponds to the rotary speed at slip-free travel,
- from the rotary speed $\Omega_{o0}$ a rotary speed $\Omega_{des,wheels}$ is determined which corresponds to the desired rotary speed of the wheels,
- from the rotary speed $\Omega_{des,wheels}$ a rotary speed $\Omega_{des,engine}$ is derived which corresponds to the desired value of the engine speed,
- from the moments of inertia $I_{actual,engine}$ and $I_{actual,wheels}$ of the drive line and wheels and from the rotary speeds $\Omega_{des,wheels}$, $\Omega_{des,engine}$, a desired value $L_{des}$ for the spin,
- from the measured rotary speeds $\Omega_{meas,engine}$ and $\Omega_{meas,wheels}$ of the drive line and wheels and the associated moments of inertia, the actual value $L_{act}$ of spin is ascertained and in that
- from the difference between the time-based derivatives of the actual value $L_{act}$ and the desired value $L_{des}$, an excess torque $T_{exc}$ is ascertained and
- the ascertained excess torque $t_{exc}$ is used as a control criterion for drive slip (wheel spin) control.

**2.** A method according to Claim 1, characterised in that the moments of inertia and the rotary wheel speeds corresponding to the transmission ratios of the gearbox and of the differential are related to one point.

**3.** A method according to Claim 1 or 2, characterised in that added to the excess torque $T_{exc}$ is a further fraction which is proportional to the differential ($L_{act}$-$L_{des}$).

**4.** A method according to one of Claims 1 to 3, characterised in that the time-related pattern of torque dissipation is such that for a critical travelling condition there is a complete dissipation of the excess torque $T_{exc}$.

**5.** A method according to one of Claims 1 to 4, characterised in that in the event of a tendency towards a critical driving condition there is an at least partial dissipation of the excess torque $T_{exc}$.

**6.** A method according to one of Claims 1 to 5, characterised in that in a non-critical travelling situation, there is a complete build-up of torque.

**7.** A method according to one of Claims 1 to 6, characterised in that when there is a tendency towards a critical driving condition, there is only a partial build-up of the torque.


## Revendications

**1.** Procédé pour régler le glissement en traction, selon lequel un couple excessif développé par le moteur est déterminé à partir de la masse d'inertie des roues, de la masse d'inertie du système d'entraînement, de la vitesse de rotation des roues motrices et de la vitesse de rotation du moteur, caractérisé par le fait

- qu'une valeur $\Omega_{\sigma0}$ de la vitesse de rotation, qui correspond à la vitesse de rotation dans le cas d'un déplacement sans glissement, est déterminée à partir de la vitesse $v_{Fzg}$ du véhicule et des rayons dynamiques $R_{dyn}$ des roues,
- qu'une vitesse de rotation $\Omega_{consigne, roues}$, qui correspond à la valeur de consigne de la vitesse de rotation des roues, est déterminée à partir de la vitesse de rotation $\Omega_{\sigma0}$,
- qu'une vitesse de rotation $\Omega_{consigne, moteur}$, qui correspond à la vitesse de consigne de la vitesse de rotation du moteur, est dérivée de la vitesse de rotation $\Omega_{consigne, roues}$,
- qu'une valeur de consigne $L_{consigne}$ du moment angulaire est déterminée à partir des moments d'inertie $I_{réel, moteur}$ et $I_{réel, roues}$ du système d'entraînement et des roues ainsi qu'à partir des vitesses de rotation $\Omega_{consigne, roues}$, $\Omega_{consigne, moteur}$,
- que la valeur réelle $L_{réelle}$ du moment angulaire est déterminée à partir des vitesses de rotation mesurées $\Omega_{mesurée, moteur}$, $\Omega_{mesurée, roues}$ du système d'entraînement et des roues ainsi qu'à partir des moments d'inertie associés,
- qu'un couple excessif $T_{ü}$ est déterminé à partir de la différence entre les dérivées dans le temps de la valeur réelle $L_{réelle}$ et de la valeur de consigne $L_{consigne}$, et
- que le couple excessif déterminé $t_{ü}$ est utilisé en tant que critère de régulation pour une régulation du glissement en traction (ASR).

2. Procédé selon la revendication 1, caractérisé en ce que les moments d'inertie ainsi que les vitesses de rotation des roues sont rapportés à un point, en fonction des rapports de multiplication de la transmission et des différentiels des essieux.

3. Procédé selon la revendication 1 ou 2, caractérisé en ce qu'au couple excessif $T_{ü}$ est ajoutée une autre composante, qui est proportionnelle à la différence ($L_{réelle}$ - $L_{consigne}$).

4. Procédé selon l'une des revendications 1 à 3, caractérisé en ce que le comportement dans le temps de la suppression du couple est réalisé de telle sorte que, dans un état de déplacement critique, une suppression complète du couple excessif $T_{ü}$ est réalisée.

5. Procédé selon l'une des revendications 1 à 4, caractérisé en ce que, dans le cas d'une tendance vers un état de déplacement critique, une suppression au moins partielle du couple excessif $T_{ü}$ est exécutée.

6. Procédé selon l'une des revendications 1 à 5, caractérisé en ce que dans le cas d'un état de déplacement non critique, une suppression complète du couple est réalisée.

7. Procédé selon l'une des revendications 1 à 6, caractérisé en ce que dans le cas d'une tendance vers un état de déplacement critique, seule une suppression partielle du couple est réalisée.

# Fig. 1

**1.1.1**
$$\Omega_{ist,Räder} = \frac{\Omega_{,Räder}}{\ddot{U}_{Achs} \cdot \ddot{U}_{Getriebe}}$$

$$\Omega_{ist,Motor} = \Omega_{mess,Motor}$$

**1.1.2**
$$\Omega_{\sigma0} = \frac{V_{Fzg}}{2\pi \times R_{dyn}}$$

$$\Omega_{soll,Räder} = \Omega_{\sigma0} / (1 - G_{soll})$$

**1.1.3**
$$\Omega_{soll,Motor} \equiv \Omega_{soll} = \frac{\Omega_{soll,Räder}}{\ddot{U}_{Achs} \cdot \ddot{U}_{Getriebe}}$$

**1.1.4**
$$I_{Ist,Motor} = I_{Motor}$$
$$I_{Ist,Räder} = I_{Räder} (\ddot{U}_{Achse} \cdot U_{Getriebe})^2$$

**1.1.5**
$$L_{soll} = (I_{ist,Räder} + I_{ist,Motor}) \times \Omega_{soll} \times 2\pi$$

**1.2**
$$L_{Ist} = 2\pi \times (I_{ist,Räder} \times \Omega_{ist,Räder} + I_{ist,Motor} \times \Omega_{ist,Motor})$$

**1.3**
$$T_{\ddot{u}1} = \frac{d(L_{Ist} - L_{soll})}{dt}$$

## Fig.2

$T_{\ddot{U}}$

2.1 $\quad T_{\ddot{U}2} = K_p \times ( L_{Ist} - L_{soll} )$

2.2 $\quad T_{\ddot{U}} = T_{\ddot{U}1}$ $\qquad\qquad$ $T_{\ddot{U}} - T_{\ddot{U}1} + T_{\ddot{U}2}$

## Fig. 4

$G$

$G_{auf}$ $\qquad$ $G_{ab}$

1

$0{,}5\sigma_0$ $\quad$ $0{,}6\sigma_0$ $\qquad$ $0{,}8\sigma_0$ $\qquad$ $\sigma_0$ $\quad$ $\sigma$

Fig. 3

3.1 $(\dot{L}_{ist} - \dot{L}_{soll}) > 0$

3.1.1 J 3.1.2 N

3.2 $L_{ist} - L_{soll} > 0$    3.2 $L_{ist} - L_{soll} > 0$

3.2.1 J    3.2.2 N    3.2.3 N    3.2.4 J

3.3 $\sigma > \sigma_0$    3.6 $\sigma < \sigma_0$    3.8 $\sigma > \sigma_0$    3.11 $\sigma > 0.8\sigma_0$

3.3.1 J    3.3.2 N    3.6.1    3.6.2 J    3.8.2    3.9 N    3.11.1 J    3.11.2

voller Abbau

3.4 $\sigma > 0.6\sigma_0$    kein Eingriff    3.9 $\sigma < 0.8\sigma_0$    kein Eingriff

3.4.1 J    3.4.2 N    3.7 $\sigma \geq \sigma_0$    3.8.1 J    3.9.1    3.9.2 J

kein Eingriff    3.5 $0.6 \leq \sigma \leq \sigma_0$    3.7.1 N    3.7.1 J    kein Eingriff    voller Aufbau    3.12 $\sigma < 0.8\sigma_0$

3.5.1 J    voller Abbau    N    3.12.1 J

teilweiser Abbau    $0.8\sigma_0 \leq \sigma \leq \sigma_0$    voller Aufbau

3.10    3.10.1 J

teilweiser Aufbau

EP 0 460 364 B1

## Fig.5

## Fig.6

## Fig.7

## Fig.8

8.1

$$\Omega_{aktuell} = 2 * \Omega_{mess} - \Omega_{alt}$$

8.2